# NEW EUROPEAN PATENT SPECIFICATION

(11) **EP 1 302 309 B2**
(45) Date of publication and mention of the opposition decision: **07.09.2016**
(45) Mention of the grant of the patent: 03.09.2008
(21) Application number: 02257059.2
(22) Date of filing: 10.10.2002
(51) Int. Cl.: B32B 27/18, B32B 27/36, B32B 27/34, B32B 27/40, C08K 5/3462, C08K 5/3435

(54) **MULTI-LAYER, WEATHERABLE COMPOSITIONS AND METHOD OF MANUFACTURE THEREOF**
MEHRSCHICHTIGE, WITTERUNGSBESTÄNDIGE ZUSAMMENSETZUNGEN SOWIE VERFAHREN ZU DEREN HESTELLUNG
COMPOSITIONS MULTICOUCHES RÉSISTANTES AUX INTEMPÉRIES ET LEUR MÉTHODE DE FABRICATION

(30) Priority: 12.10.2001 US 682749; 09.11.2001 US 338394 P
(43) Date of publication of application: 16.04.2003
(73) Proprietor: SABIC Innovative Plastics IP B.V., 4612 PX Bergen op Zoom (NL)
(72) Inventor: Vollenberg, Peter H. Th., 4617 GB Bergen op Zoom (NL); Dhawan, Sandeep, Evansville, Indiana 47712 (US); Starkey, Kyle P., Evansville, Indiana 47711 (US); Tadros, Safwat E., Evansville, Indiana 47720 (US)
(74) Representative: Müller Schupfner & Partner Patent- und Rechtsanwaltspartnerschaft mbB

(56) References cited:
- EP-A- 0 595 413
- EP-A- 0 900 823
- EP-A1- 0 434 608
- EP-A1- 0 483 488
- EP-A1- 0 568 988
- EP-A1- 0 734 833
- WO-A-01/79340
- WO-A-98/19862
- WO-A-99/48685
- WO-A-99/57189
- US-A- 4 619 956
- US-A- 5 597 854
- US-A- 5 736 597
- US-B1- 6 239 276

## Description

There is substantial commercial interest in the use of multi-layer, weatherable polymeric materials in various product forms such as sheets, films, shaped products, thermoformed articles, packaging, and architectural products, as well as coatings. Many different plastics are used as the base layer, or substrate, in these products in order to take advantage of particular physical, chemical, and mechanical properties. The upper layer, often referred to as the topcoat, often functions to protect the base layer or layers, for example to maintain gloss and shine. However, over time, the upper layer is aesthetically undesirable to consumers due to scratches and/or yellowing in color. There remains a need for weatherable compositions, particularly upper coats, that provide protection to an underlying substrate.

WO-A-9948685 discloses multilayer plastic composite articles comprising a thermoplastic resin substrate which can be polycarbonate, an ABS or ASA resin, a polyphenylene ether or polyphenylene ether/polystryene blend, a polyester or an admixture of polycarbonate with ABS, ASA or polyester and at least one surface layer comprising a cyloaliphatic polyester or cycloaliphatic polyester blend which is adherent to at least one surface of the substrate. Decorative layers can be located between the substrate and the surface layers.

EP-A-0900823 discloses weatherable polycarbonate compositions comprising at least one of a piperazinone and piperazine dione based HALS, and at least one of a benzotriazole, benzophenone, triazine, oxanilide, and cyanoacrylate based UVA. The combination of these HALS and UVA exhibits a synergy that results in ehanced protection of the polycarbonate compositions by imparting photostability to the polycarbonate formulations, thereby reducing yellowing or other forms of light induced degradation.

US-A-5736597 discloses o-hydroxyphenyl-s-triazines which can be used alone or in combination with sterically hindered amines of the polyalkylpiperadine type for stabilizing organic polymers.

WO-A-9957189 discloses a polymeric article, such as an extruded or molded article or a biaxially oriented tape of film, and a method of stabilizing such a polymeric article to protect the article from degradation due to exposure to UV light. The article is formed by lending a polymeric material with from 50 to 5,000 ppm of at least one ortho hydroxyl tris-aryl triazine light absorber and from 500 ppm to 1.25 percent of at least one oligomeric, polymeric, or high molecular weight HALS having a molecular weight of at least about 500, wherein the weight ratio of HALS to triazine light absorber is from 3:1 to 20:1, to form a stabilized polymeric composition, and forming an extruded or molded article or a biaxially oriented tape or film from the stabilized polymeric composition.

EP-A-0595413 discloses a plastic sheet containing a copolymer, which copolymer is obtainable by reacting a dimethyl terephthalate or terephthalic acid with a mixture of 99-55 mole % ethylene glycol and 1-45 mole % cyclohexane dimethanol, a 2 to 100-µ thick layer being present at at least one surface of the sheet, which layer also contains the copolymer and a UV light-absorbing additive.

WO-A-0179340 discloses a light stable article containing at least one single or multiple layer polyester film and an effective amount of a light absorbing composition comprising one or more of an ultraviolet light absorbing compound, a hindered amine light stabilizer (HALS) composition, and a phosphonate stabilizing compound. Generally, the weight ratio of the light absorbing compound to the HALS composition is greater than about 2:1. Various composite articles and constructions made utilizing the above light stable article are also disclosed.

WO 98/19862 discloses a UV stabilized multi-layer structure which has an easily visible UV protective layer comprising a UV protective layer and an underlying polymeric layer. The polymeric layer is either a polyester or a polycarbonate. The UV protective layer, which is exposed to UV radiation and protects the polymeric layer, comprises a UV absorbing compound, an optical brightener present in an amount sufficient to cause visual illumination of the UV protective layer upon exposure to a light source and a polymeric base material of either a polyester, polycarbonate or acrylic. Upon exposure to a UV light or white light source the UV protective layer is visibly illuminated. A method of detecting the UV protective layer in the UV stabilized multi-layer structure is also disclosed.

A weatherable, multi-layer composition comprises: an upper layer comprising: a) a polymer system consisting essentially of a cycloaliphatic polyester resin and; b) an additive composition comprising a hindered amine light stabilizer and a hydroxyphenyl-triazine or -pyrimidine UV absorber; an intermediate layer comprising a polymeric resin compatible with the polymer system in said upper layer, and optionally an additive composition comprising TiO₂, dyes, pigments, or special effects additives; and a polymeric substrate, wherein the intermediate layer is disposed between and in intimate contact with the upper layer and the substrate.

The invention further relates to a weatherable, multi-layered article.

It has been unexpectedly found by the inventors hereof that a weatherable, aesthetic multi-layer composition maybe achieved by using specific formulations for the various layers as disclosed herein. The layers are disposed on a polymeric substrate, which preferably comprises polycarbonate and TiO₂.

Upper Layer. Disclosed herein is an upper layer (most commonly an upper coat) consisting essentially of a cycloaliphatic polyester resin and an additive composition comprising a hindered amine light stabilizer and a low volatility hydroxyphenyl-triazine or -pyrimidine UV absorber.

By "consisting essentially of" is meant that no additional polymers other than the cycloaliphatic polyester as described herein may be present.

Upper Layer Component 1 - Cycloaliphatic polyesters: In applications wherein optical transparency is desired and improved yellowing / discoloration properties are desired, cycloaliphatic polyesters are used in the upper and intermediate layers. They also have improved chemical resistance and low water absorption when compared to the base substrate layer alone. In certain embodiments, cycloaliphatic polyester layers may also have melt compatibility with the substrate resin, allowing easy recycling of the multi-layer structures through simple re-melting of the multi-layer article and reforming one of the layers as a combination of the substrate and the cycloaliphatic layer. This attribute is in contrast to other layers known in the art, such as chlorinated polyolefins, which react upon re-melting to cause degradation of the base substrate layer resin, particularly if the base substrate layer resin is a high melting condensation polymer like polycarbonate as is used herein.

Cycloaliphatic polyesters suitable for use herein can be defined in many ways, including by method of preparation. For example, suitable cycloaliphatic polyesters may be prepared by reaction of a diol with a dibasic acid or derivative thereof, provided that at least a portion of the diol and/or the acid is cycloaliphatic. The diols useful in the preparation of suitable polyester resins are straight chain, branched, or cycloaliphatic, with straight chain or branched alkane diols containing at least 2 carbon atoms, and at most 12 carbon atoms on average. Examples of suitable diols include, but are not limited to, ethylene glycol, propylene glycol (i.e., 1,2- and 1,3-propylene glycol), butane diol (i.e., 1,3- and 1,4-butane diol), diethylene glycol, 2,2-dimethyl-1,3-propane diol, 2-ethyl 2-methyl-1,3-propane diol, 1,3- and 1,5-pentane diol, di-propylene glycol, 2-methyl-1,5-pentane diol, 1,6-hexane diol, 1,4-cyclohexane dimethanol, triethylene glycol, 1,10-decane diol and mixtures of the foregoing.

Examples of preferred diols include dimethanol-bicyclo-octane, and dimethanol decaline. Most preferred diols are in general cycloaliphatic diols or chemical equivalents thereof, in particular 1,4-cyclohexane dimethanol or a chemical equivalent thereof. In the instance when the preferred cycloaliphatic diol can contain a mixture of cis- and trans-isomers, a cis to trans ratio of at least about 1 to 4 cis/trans, and at most about 4 to 1 cis trans is preferred, a cis/trans ratio of about 1 to 3 cis/trans being most preferred. Also, chemical equivalents of diols include esters, such as dialkylesters and diaryl esters.

As mentioned above, suitable cycloaliphatic polyesters may be prepared by reaction of a diol with a dibasic acid or derivative. Di-acids (dibasic acids) useful in the preparation of suitable cycloaliphatic polyester resins have at least two carboxyl groups, each of which is attached to a saturated carbon in a saturated ring. A preferred diacid is 1,4-cyclohexanedicarboxylic acid and most preferred is trans-1,4-cyclohexanedicarboxylic acid as further explained above. Other examples of suitable cycloaliphatic acids include decahydro-naphthalene dicarboxylic acid, norbornene dicarboxylic acids, and bicyclo-octane dicarboxylic acids and salts thereof. Linear aliphatic diacids are useful herein provided the polyester has at least one monomer containing a cycloaliphatic ring. Examples of linear aliphatic diacids include, but are not limited to succinic acid, adipic acid, dimethyl succinic acid, and azelaic acid. Various mixtures of diacid and diols are also suitable for use herein to produce suitable cycloaliphatic polyesters.

Cyclohexanedicarboxylic acids and chemical equivalents thereof can be prepared, for example, by the hydrogenation of cycloaromatic diacids and corresponding derivatives such as isophthalic acid, terephthalic acid of naphthalenic acid in a suitable solvent. This process may also include preparation with water and/or acetic acid at room temperature and atmospheric pressure using suitable catalysts such as rhodium supported on a suitable carrier of carbon or alumina, as disclosed in Friefelder et al., Journal of Organic Chemistry, 31, 34-38 (1966); U.S. Patent No. 2,675,390 to Roseneblatt, and U.S. Patent No. 4,754,064 to Lillwitz. Cyclohexanedicarboxylic acids and chemical equivalents thereof may also be prepared by the use of an inert liquid medium using a catalyst of palladium or ruthenium in carbon or silica, wherein an acid is at least partially soluble under reaction conditions, as disclosed in U.S. Patent No. 2,888,484 to Dekm et al. and U.S. Patent No. 3,444,237 to Jaffe.

During hydrogenation, two or more isomers of cyclohexane dicarboxylic acids may be obtained, in which the carboxylic acid groups are in both the cis- and trans-positions. The cis- and trans-isomers can be separated by crystallization with or without a solvent, for example, n-heptane, or by distillation. Cis-isomers tend to provides better blending; however, trans-isomers tend to have higher melting and crystallization temperatures, either of which may be preferred depending on the end use. As such, mixtures of the cis- and trans-isomers of cyclohexanedicarboxylic acids are also useful herein. When a mixture of isomers and/or more than one diacid is used, a copolyester or a mixture of two polyesters may also be used as the cycloaliphatic polyester resin.

Chemical equivalents of these diacids include esters, alkyl esters, dialkyl esters, diaryl esters, anhydrides, acid chlorides, and acid bromides. The preferred chemical equivalents comprise the dialkyl esters of the cycloaliphatic diacids. The most preferred chemical equivalent comprises dimethyl esters of the acid, particularly dimethyl-trans-1,4-cyclohexanedicarboxylate.

Dimethyl-1,4-cyclohexanedicarboxylate can be obtained by ring hydrogenation of dimethylterephthalate, wherein two isomers having the carboxylic acid groups in the cis- and trans-positions are obtained. The isomers can be separated, the trans-isomer being especially preferred. Mixtures of the isomers are suitable as explained above and preferably in the ratios as explained above.

Suitable polyester resins may also be identified structurally, and are typically obtained through the condensation or ester interchange polymerization of the above-described diol or diol equivalent component with the diacid or diacid chemical equivalent component, and having recurring units of formula 1: 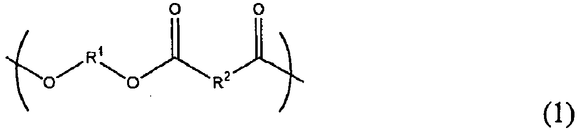 wherein R¹ is an alkyl or cycloaliphatic radical preferably containing at least 2 carbon atoms, and at most 12 carbon atoms on average, and which is the residue of a straight chain, branched, or cycloaliphatic alkane diol having at least 2 carbon atoms, and at most 12 carbon atoms on average, or chemical equivalents thereof, and R² is an alkyl or a cycloaliphatic radical, which is the decarboxylated residue derived from a diacid, with the proviso that at least one of R¹ or R² is a cycloalkyl group.

In one embodiment, the cycloaliphatic polyester is poly-1,4-cyclohexane-dimethanol-1,4-cyclohexanedicarboxylate (hereinafter referred to as PCCD), wherein R¹ and R² is a cyclohexylidene radical, and further wherein R² is derived from cyclohexanedicarboxylate or a chemical equivalent thereof, and is selected from the cis- or trans-isomer or a mixture of cis- and trans-isomers thereof. Suitable cycloaliphatic polyester resins can be generally made as described in U.S. Patent No. 2,465,319 to Whinfield et al. The reaction is generally conducted in the presence of a suitable catalyst such as, for example, tetra(2-ethyl hexyl) titanate, in a suitable amount, typically about 50 to 400 ppm of titanium based upon the final product.

Upper Layer Component 2 - HALs and UV Absorbers. The upper layer further includes an additive composition that contains a combination of a hindered amine light stabilizers and a hydroxyphenyl-triazine or -pyrimidine UV absorber. Ultraviolet stabilizers are used to improve upon the light stability, weatherability, and color retention properties. Inclusion of light stabilizers in the top layer has also been found to provide additional light stability for the subsequent layers and support material.

Useful hindered amine light stabilizers (hereinafter HALS) include substituted piperidine moieties and oligomers thereof, as disclosed in U.S. Patent No. 4,895,901 to Ramey et al., U.S. Patent No. 4,210,612 to Karrer, and U.S. Patent No. 5,015,682 to Galbo. The preferred HALS is a 4-piperidinol derivative having the general formula (4): 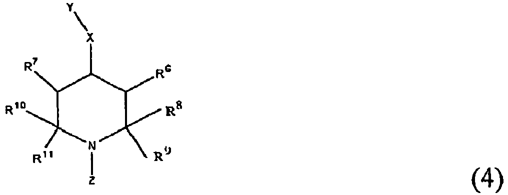 wherein X is oxygen, and Y is preferably hydrogen, or hydroxyalkyl, aminoalkyl, or alkyl substituted by both hydroxyl and amino groups, where the alkyl has up to about 20 carbon atoms on average, but may also represent a moiety compatible with the light stabilizing properties of the remainder of the molecule and that furnishes the requisite reactive group. R⁶ and R⁷ are each independently selected from the group consisting of a hydrogen atom, an alkyl group, an alkenyl group, or an arylalkyl group. In one embodiment, R⁶ and R⁷ are each hydrogen. R⁸, R⁹, R¹⁰, and R¹¹ are each independently selected from the group consisting of an alkyl group having 1 to about 6 carbon atoms, phenyl, an arylalkyl group, an aromatic heterocyclic group having 5 or 6 carbon atoms, and containing an oxygen, sulphur or nitrogen atom, or R⁸, R⁹, R¹⁰, and R¹¹ respectively, together or with the carbon atom to which they are attached may represent a C₅ to C₁₂ cycloalkyl group. Preferably, R⁸, R⁹, R¹⁰, and R¹¹ are methyl. Z is an oxy radical, an alkyl group, an alkenyl group, an alkoxyalkyl group, an arylalkyl group that is unsubstituted or which has one or more substituents in its aryl moiety, including, for example, 2,3-epoxypropyl. Z is preferably represented by the formula -CH₂COOR¹², wherein R¹² is an alkyl group, an alkenyl group, a phenyl group, an arylalkyl group, or a cyclohexyl group. Most preferably, Z has the formula -CH₂CH(R¹⁴)OR¹³, wherein R¹⁴ is a hydrogen atom, a methyl group or a phenyl group and R¹³ is a hydrogen atom, an alkyl group, an ester, a carbonyl, an acyl group, an aliphatic acyl group, or a group represented by the formula -COOR¹⁵, or -OOCR¹⁵, wherein R¹⁵ is selected from an alkyl group and a benzyl group.

In one embodiment, the oligomeric HALS has formula (5): 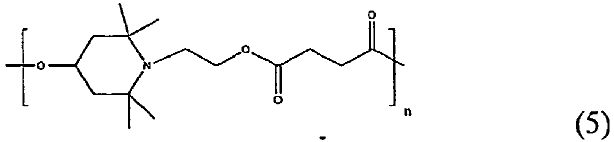 wherein n is on average greater than 9, and less than 12 (i.e., having a molecular weight from 3100 to 4000). This material is commercially available under the trade name TINUVIN 622 (CAS Number 065447-77-0, Ciba Specialty Chemicals, Inc., Basel Switzerland).

In another embodiment, the HALS has the general formula (6) 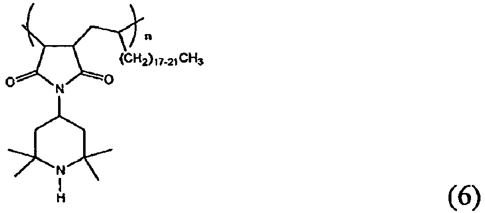 wherein n is on average greater than 4, and less than 7 (i.e., having a molecular weight from 3000 to 4000). One example of this type of HALS wherein n is on average greater than 4 and less than 7 is commercially available under the trade name UVINUL 5050H from BASF.
In yet another embodiment, the hindered HALS has formula (7), which is commercially available under the trade name SANDUVOR 3058 from Clariant.

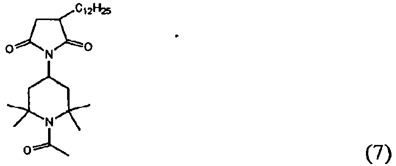

In a different embodiment, the hindered HALS has formula (8), which is commercially available under the trade name Nylostab S-EED available from Clariant.

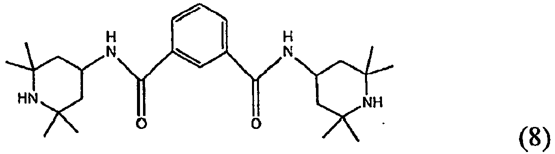

The HALS is present in the upper layer at a concentration greater than 0.01%, preferably greater than 0.1%, most preferably greater than 0.5% by weight based on the total weight of the upper layer. The HALS is also present in the upper layer at a concentration less than 10%, preferably less than 2%, most preferably less than 1.5% by weight based on the total weight of the upper layer.

In addition to the HALS, the additive composition in the first layer also comprises a low volatility hydroxyphenyl-triazine or -pyrimidine UV absorber. Suitable low volatility hydroxyphenyl-triazine or pyrimidine UV absorbers include compounds having a 2,4,6-trisaryl-1,3,5-triazine or 2,4,6-trisaryl-1,3-pyrimidine group, and which further contain free hydroxyl groups. Such compounds are known, being described, for example, in U.S. Patent No. 3,118,887 to Johns et al., U.S. Patent No. 3,244,708 to Duennenberger et al., U.S. Patent No. 3,423,360 to Huber et al., WO 86/3528, U.S. Patent No. 4,831,068 to Reinert et al., EP-A-434 608, EP-A-458 741, EP-A-483 488, U.S. Patent No. 5,298,067 to Valet, U.S. Patent No. 3,442,898 to Luethi et al., and U.S. Patent No. 4,895,981 to Reinert et al.

With respect to the UV absorbers, in one embodiment, the UV absorbers comprise pyrimidines and triazines having two phenyl groups, and a resorcinol or substituted resorcinol group attached to the triazine or pyrimidine ring, as disclosed in U.S. Patent No. 6,239,276 B1 to Gupta et al. and U.S. Patent No. 5,597,854 to Birbaum et al. Suitable low volatility hydroxyphenyl-triazine UV absorbers are generally represented by formula (9): 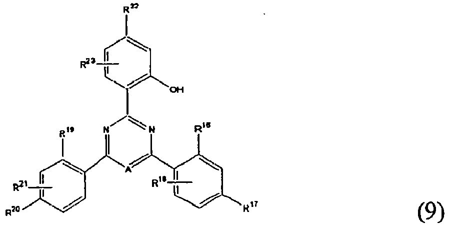 wherein A is N or CH; and R¹⁶, R¹⁷, R¹⁸, R¹⁹, R²⁰, R²¹, R²², and R²³ are each independently selected from the group consisting of hydrogen, alkyl, cycloalkyl, halogen, haloalkyl, alkoxy, alkylene, aryl, alkyl-aryl, or a combination thereof. Preferably, the low volatility hydroxyphenyl-triazine UV absorber has formula (10):

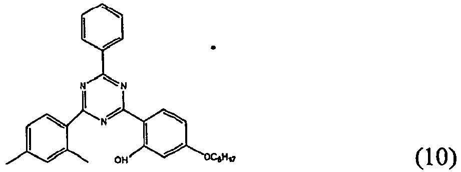

This material is commercially available under the trade name TINUVIN 1577 (CAS Number 147315-50-2, Ciba Specialty Chemicals, Inc., Basel Switzerland).

Another example of a preferred low volatility hydroxyphenyl-triazine UV absorber has formula (11):

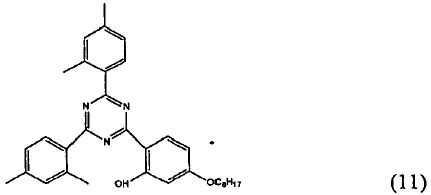

This material is commercially available under the trade name CYASORB UV-1164, from Cytec Industries.

The hydroxyphenyl-triazine or -pyrimidine UV absorbers are present in the upper layer at a concentration greater than 0.01%, preferably greater than 0.1%, most preferably greater than 0.2% by weight, based on the total weight of the upper layer. Hydroxyphenyl-triazine or-pyrimidine UV absorbers are furthermore present in the upper layer at a concentration less than 10%, preferably less than 3%, most preferably less than 2.5% by weight, based on the total weight of the upper layer.

### Upper Layer - Optional Components.

The upper layer may also contain catalyst quenchers (also known as stabilizers) that inhibit activity of any catalysts that may be present in the resins. Catalyst quenchers are described in detail in U.S. Patent No. 5,441,997 to Walsh et al.

In one embodiment, the quenchers used provide a transparent and colorless product. Quenchers are used at a concentration of at least 0.001%, preferably at least 0.005% by weight of the total layer or substrate. Quenchers are also used at a concentration of at most 10%, preferably at most 2% by weight of the total layer or substrate. Preferred quencher/stabilizers include an effective amount of an acidic phosphate salt; an acid, alkyl, aryl or mixed phosphite having at least one acidic hydrogen; a Group IB or Group IIB metal phosphate salt; a phosphorus oxo acid, a metal acid pyrophosphate or a mixture thereof and the like. The suitability of a particular compound for use as a stabilizer may be readily determined without undue experimentation by one of skill in the art.

Useful acidic phosphate salts include sodium dihydrogen phosphate, mono zinc phosphate, potassium hydrogen phosphate and calcium dihydrogen phosphate. The phosphites may have the formula P(OR³)(OR⁴)(OR⁵), wherein R³, R⁴ and R⁵ are independently selected from the group consisting of hydrogen, alkyl and aryl with the proviso that at least one of R³, R⁴ and R⁵ is hydrogen. The phosphate salts of a Group IB or Group IIB metal of the periodic table include zinc phosphate and copper phosphate. The phosphorus oxo acids include phosphorous acid, phosphoric acid, polyphosphoric acid or hypophosphorous acid. Suitable polyacid pyrophosphates are of the formula Mₓ H_{y} Pₙ O₃ₙ₊₁, wherein M is a metal, x is from 1 to 12, y is from 1 to 12, n is from 2 to 10, and the sum of x+y is equal to n+2. The preferred M is an alkaline or alkaline earth metal.

In one embodiment, the quenchers include oxo acids of phosphorous or acidic organo phosphorus compounds. Inorganic acidic phosphorus compounds may also be used as quenchers, with the most preferred quenchers being phosphoric or phosphorous acid.
The suitability of a particular compound for use as a quencher / stabilizer, and the determination of how much is to be used in the layer, are readily determined by those of skill in the art without undue experimentation.

The thickness of the upper layer is determined by a number of factors, for example the degree of weatherability required, the cost of the materials, and the method of manufacture. In one embodiment, the upper layer has a thickness greater than 2.54 µm (0.1 mils) and less than about 1.27 mm (50 mils). In another embodiment, greater than 50.8 µm (2 mils) and less than 762 µm (30 mils). In yet another embodiment, greater than 127µm (5 mils) on average and less than 508 µm (20 mils) on average.

Intermediate Layer - Component 1 - Polymer Resin. The upper layer is disposed on top of, and in intimate contact with an intermediate layer. The intermediate layer or layers comprise as the only polymer a cycloaliphatic polyester resin compatible with the upper layer to provide a suitable adhesion with the upper top layer, and optionally an additive composition comprising HALs, UV absorbers, dyes, pigments, special effects additives, or a combination comprising at least one of the foregoing.

As used herein, a suitable adhesion between the two layers includes a peel strength of at least 89 kg/m (5). In one embodiment, the adhesion between the layers has a peel strength of at least about 179 kg/m (10). In another embodiment, peel test. Suitable polymeric resins include cycloaliphatic polyesters, both aliphatic and aromatic polyamides, polyurethanes, and polymeric ionomers.

Suitable polymeric resins are characterized by having a suitable adhesion between the intermediate layer and the top layer, with the proviso that if a cycloaliphatic polyester is used for the upper layer, then the suitable polymeric resin for the intermediate layer is also a cycloaliphatic polyester.

In the invention, a cycloaliphatic polyester is used for the upper top layer, the polymeric resin for the intermediate layer is a cycloaliphatic polyester, e.g., PCCD or a cycloaliphatic polyester blend, e.g., PCCD and polycarbonate.

Intermediate Layer - Optional Components. TiO₂ suitable for use herein has an average particle size greater than 0.01 µm (microns), preferably greater than 0.2 µm (microns). Also, suitable TiO₂, has an average particle size less than 1 µm (micron), preferably less than 0.4 µm (microns). The TiO₂ when used, is present in the intermediate layer in an amount greater than about 1%, preferably greater than about 3% by weight of the total layer on average. When used, the TiO₂ is present in the intermediate layer in an amount less than about 12%, preferably less than about 10% by weight of the total layer on average.

The thickness of the intermediate layer is also dependent on a number of factors as described above, but is generally greater than 50.8 µm (2 mils), preferably greater than 76.2 µm (3 mils), most preferably greater than 127 µm (5 mils) on average. The intermediate layer also has a thickness less than 762 µm (30 mils), preferably less than about 508 µm (20 mils), most preferably less than 381 µm (15 mils) on average.

The intermediate layer may further comprise additional additives such as suitable dyes, pigments, and special effects additives as is known in the art, as well as mold release agents, antioxidants, lubricants, nucleating agents such as talc and the like, other stabilizers including but not limited to UV stabilizers, such as benzotriazole, and supplemental reinforcing fillers, flame retardants, pigments or combinations thereof.

Substrate Layer. The substrate layer is disposed in contact with the intermediate layer on a surface opposite the first layer, may be in the form of a film (for example, a layer 25.4 µm to 1.27 mm (1 to about 50 mils) thick) or an article. The substrate comprises a polymeric material (plastic) known in the art.

Suitable substrate materials include thermoplastic resins, preferably selected from cellulosics, polyamides, polystyrenes, polyimides, polyphenylene oxides, polysulfones, vinyls, polycarbonates, polyacetal resins, polyacrylic ester resins, polyester resins, alkyds, diallyl phthalates, epoxies, melamines, phenolics, urethanes, silicones, acrylates, butyls, polysulfides, polyurethanes, neoprenes, nitriles, and styrene-butadienes.

In one embodiment of the substrate layer, the plastic comprises titanium dioxide as described above and polycarbonate. The term "polycarbonate" and/or "polycarbonate composition" includes compositions having structural units of formula 17: 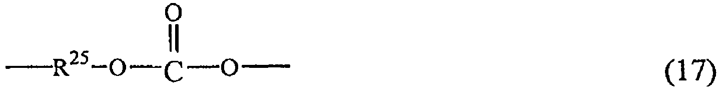 wherein R²⁵ is selected from aromatic organic radicals and/or aliphatic, alicyclic, or heteroaromatic radicals. Preferably, R²⁵ is an aromatic organic radical and, more preferably, a radical having the formula -A¹-Y¹-A²- wherein each of A¹ and A² is a monocyclic divalent aryl radical and Y¹ is a bridging radical having one or more atoms which separate A¹ from A². In an exemplary embodiment, one atom separates A¹ from A². Illustrative non-limiting examples of radicals of this type include: -O-, -S-, -S(O)-, -S(O2)-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical Y¹ can be a hydrocarbon group or a saturated hydrocarbon group such as methylene, cyclohexylidene, or isopropylidene.

Suitable polycarbonates can be produced by the interfacial reaction of dihydroxy compounds in which only one atom separates A¹ and A². As used herein, the term "dihydroxy compound" includes, for example, bisphenol compounds having generally formula 18: 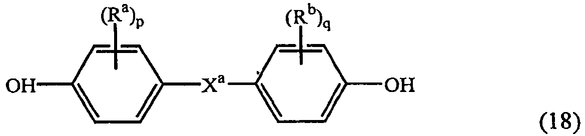 wherein R^{a} and R^{b} each represent a halogen atom or a monovalent hydrocarbon group and may be the same or different; p and q are each independently integers from 0 to 4; and X^{a} is one of the groups of formula 19: 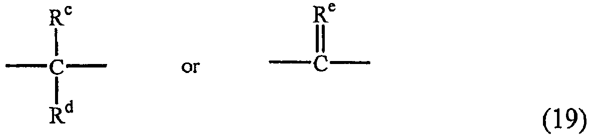 wherein R^{c} and R^{d} each independently represent a hydrogen atom or a monovalent linear or cyclic hydrocarbon group and R^{e} is a divalent hydrocarbon group.

Some illustrative, non-limiting examples of suitable dihydroxy compounds include the dihydroxy-substituted aromatic hydrocarbons disclosed by name or formula (generic or specific) in U.S. Patent 4,217,438. A nonexclusive list of specific examples of the types of bisphenol compounds represented by formula 11 includes: 1,1-bis(4-hydroxyphenyl) methane; 1,1-bis(4-hydroxyphenyl) ethane; 2,2-bis(4-hydroxyphenyl) propane (hereinafter "bisphenol A" or "BPA"); 2,2-bis(4-hydroxyphenyl) butane; 2,2-bis(4-hydroxyphenyl) octane; 1,1-bis(4-hydroxyphenyl) propane; 1,1-bis(4-hydroxyphenyl) n-butane; bis(4-hydroxyphenyl) phenylmethane; 2,2-bis(4-hydroxy-1-methylphenyl) propane; 1,1-bis(4-hydroxy-t-butylphenyl) propane; bis(hydroxyaryl) alkanes such as 2,2-bis(4-hydroxy-3-bromophenyl) propane; 1,1-bis(4-hydroxyphenyl) cyclopentane; and bis(hydroxyaryl) cycloalkanes such as 1,1-bis(4-hydroxyphenyl) cyclohexane.

Two or more different dihydric phenols or a copolymer of a dihydric phenol with a glycol or with a hydroxy (-OH) or acid-terminated polyester may be employed, or with a dibasic acid or hydroxy acid, in the event a carbonate copolymer rather than a homopolymer may be desired for use. Polyarylates and polyester-carbonate resins or their blends can also be employed. Branched polycarbonates are also useful, as well as blends of linear polycarbonate and a branched polycarbonate. The branched polycarbonates may be prepared by adding a branching agent during polymerization.

Suitable branching agents include polyfunctional organic compounds containing at least three functional groups, which may be hydroxyl, carboxyl, carboxylic anhydride, haloformyl, and mixtures thereof. Examples include, but are not limited to trimellitic acid, trimellitic anhydride, trimellitic trichloride, tris-p-hydroxy phenyl ethane, isatin-bis-phenol, 1,3,5-tris((p-hydroxyphenyl)isopropyl)benzene, 4(4(1,1-bis(p-hydroxyphenyl)-ethyl, alpha,alpha-dimethyl benzyl)phenol, 4-chloroformyl phthalic anhydride, trimesic acid and benzophenone tetracarboxylic acid. Branching agents may be added at a level greater than 0.05%. The branching agents may also be added at a level less than 2.0 % by weight of the total. Branching agents and procedures for making branched polycarbonates are described in U.S. Patent. No. 3,635,895 to Kramer, and U.S. Patent No. 4,001,184 to Scott.

Preferred polycarbonates are based on bisphenol A, in which each of A¹ and A² of Formula 9 is p-phenylene and Y¹ is isopropylidene. The average molecular weight of the polycarbonate is greater than 5,000, preferably greater than 10,000, most preferably greater than 15,000. In addition, the average molecular weight is less than 100,000, preferably less than 65,000, most preferably less than 45,000 g/mol.

Suitable polyesters include those derived from an aliphatic, cycloaliphatic, or aromatic diol, or mixtures thereof, containing from 2 to 10 carbon atoms and at least one aromatic dicarboxylic acid. Preferred polyesters are derived from an aliphatic diol and an aromatic dicarboxylic acid having repeating units of the following general formula 20: 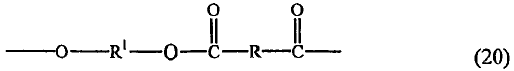 wherein R¹ is an C₆-C₂₀ alkyl, or aryl radical, and R is a C₆-C₂₀ alkyl or aryl radical comprising a decarboxylated residue derived from an alkyl or aromatic dicarboxylic acid.

Examples of aromatic dicarboxylic acids represented by the decarboxylated residue R are isophthalic or terephthalic acid, 1,2-di(p-carboxyphenyl)ethane, 4,4'-dicarboxydiphenyl ether, 4,4' bisbenzoic acid, and mixtures thereof. These acids contain at least one aromatic nucleus. Acids containing fused rings can also be present, such as in 1,4- 1,5- or 2,6-naphthalene dicarboxylic acids. The preferred dicarboxylic acids are terephthalic acid, isophthalic acid, naphthalene dicarboxylic acid or a mixture thereof.

The diol may be a glycol, such as ethylene glycol, propylene glycol, trimethylene glycol, 2-methyl-1,3-propane glycol, hexamethylene glycol, decamethylene glycol, cyclohexane dimethanol, or neopentylene glycol; or a diol such as 1,4-butanediol, hydroquinone, or resorcinol.

Also contemplated herein are the above polyesters with minor amounts, e.g., from 0.5 to 30 percent by weight, of units derived from aliphatic acids and/or aliphatic polyols to form copolyesters. The aliphatic polyols include glycols, such as poly(ethylene glycol). Such polyesters can be made following the teachings of, for example, U.S. Pat. Nos. 2,465,319 and 3,047,539.

The most preferred polyesters are poly(ethylene terephthalate) ("PET"), poly(1,4-butylene terephthalate), ("PBT"), and poly(propylene terephthalate) ("PPT"). One preferred PBT resin is one obtained by polymerizing a glycol component at least 70 mole %, preferably at least 80 mole %, of which consists of tetramethylene glycol and an acid component at least 70 mole %, preferably at least 80 mole %, of which consists of terephthalic acid, and polyester-forming derivatives therefore. The preferred glycol component can contain not more than 30 mole %, preferably not more than 20 mole %, of another glycol, such as ethylene glycol, trimethylene glycol, 2-methyl-1,3-propane glycol, hexamethylene glycol, decamethylene glycol, cyclohexane dimethanol, or neopentylene glycol. The preferred acid component can contain not more than 30 mole %, preferably not more than 20 mole %, of another acid such as isophthalic acid, 2,6-naphthalene dicarboxylic acid, 2,7-naphthalene dicarboxylic acid, 1,5-naphthalene dicarboxylic acid, 4,4'-diphenyl dicarboxylic acid, 4,4'-diphenoxyethane dicarboxylic acid, p-hydroxy benzoic acid, sebacic acid, adipic acid and polyester-forming derivatives thereof.

Block copolyester resin components are also useful, and can be prepared by the transesterification of (a) straight or branched chain poly(1,4-butylene terephthalate) and (b) a copolyester of a linear aliphatic dicarboxylic acid and, optionally, an aromatic dibasic acid such as terephthalic or isophthalic acid with one or more straight or branched chain dihydric aliphatic glycols. For example a poly(1,4-butylene terephthalate) can be mixed with a polyester of adipic acid with ethylene glycol, and the mixture heated at 235°C to melt the ingredients, then heated further under a vacuum until the formation of the block copolyester is complete. As the second component, there can be substituted poly(neopentyl adipate), poly(1,6-hexylene azelate-coisophthalate), poly(1,6-hexylene adipate-coisophthalate) and the like. An exemplary block copolyester of this type is available commercially from General Electric Company, Pittsfield, Mass., under the trade designation VALOX 330.

Especially useful when high melt strength is important are branched high melt viscosity poly(1,4-butylene terephthalate) resins, which include a small amount of e.g., up to 5 mole percent based on the terephthalate units, of a branching component containing at least three ester forming groups. The branching component can be one which provides branching in the acid unit portion of the polyester, or in the glycol unit portion, or it can be hybrid. Illustrative of such branching components are tri- or tetracarboxylic acids, such as trimesic acid, pyromellitic acid, and lower alkyl esters thereof, and the like, or preferably, polyols, and especially preferably, tetrols, such as pentaerythritol, triols, such as trimethylolpropane; or dihydroxy carboxylic acids and hydroxydicarboxylic acids and derivatives, such as dimethyl hydroxyterephthalate. The branched poly(1,4-butylene terephthalate) resins and their preparation are described in Borman, U.S. Pat. No. 3,953,404.

In addition to terephthalic acid units, small amounts, e.g., from 0.5 to 15 percent by weight of other aromatic dicarboxylic acids, such as isophthalic acid or naphthalene dicarboxylic acid, or aliphatic dicarboxylic acids, such as adipic acid, can also be present, as well as a minor amount of diol component other than that derived from 1,4-butanediol, such as ethylene glycol or cyclohexylenedimethanol, as well as minor amounts of trifunctional, or higher, branching components, e.g., pentaerythritol, and trimethyl trimesate. In addition, the poly(1,4-butylene terephthalate) resin component can also include other high molecular weight resins, in minor amount, such as poly(ethylene terephthalate), block copolyesters of poly(1,4-butylene terephthalate) and aliphatic/aromatic polyesters. The molecular weight of the poly(1,4-butylene terephthalate) should be sufficiently high to provide an intrinsic viscosity of about 0.6 to 2.0 deciliters per gram(dl/g), preferably 0.8 to 1.6 dl/g, measured, for example, as a solution in a 60:40 mixture of phenol and tetrachloroethane at 30°C.

Preferred aromatic carbonates are homopolymers, for example, a homopolymer derived from 2,2-bis(4-hydroxyphenyl)propane (bisphenol-A) and phosgene, commercially available under the trade designation LEXAN™ from General Electric Company. When polycarbonate is used, the polyester resin blend component of the composition comprises about 5 to about 50 percent by weight of polycarbonate, and 95 to 50 percent by weight of polyester resin, based on the total weight of the polyester blend component.

The polyester resin blend component may further optionally comprise impact modifiers such as a rubbery impact modifier. Typical impact modifiers are derived from one or more monomers selected from the group consisting of olefins, vinyl aromatic monomers, acrylic and alkyl acrylic acids and their ester derivatives, as well as conjugated dienes. Especially preferred impact modifiers are the rubbery, high-molecular weight materials including natural and synthetic polymeric materials showing elasticity at room temperature. They include both homopolymers and copolymers, including random, block, radial block, graft and core-shell copolymers, as well as combinations thereof. Suitable modifiers include core-shell polymers built up from a rubber-like core on which one or more shells have been grafted. The core typically consists substantially of an acrylate rubber or a butadiene rubber. One or more shells typically are grafted on the core. The shell preferably comprises a vinyl aromatic compound and/or a vinyl cyanide and/or an alkyl(meth)acrylate. The core and/or the shell(s) often comprise multifunctional compounds which may act as a cross-linking agent and/or as a grafting agent. These polymers are usually prepared in several stages.

Polyolefins useful herein have the general structure: CₙH₂ₙ and include polyethylene, polypropylene and polyisobutylene with preferred homopolymers being polyethylene, linear low density polyethylene (LLDPE), high density polyethylene (HDPE) and medium density polyethylene (MDPE) and isotatic polypropylene. Polyolefin resins of this general structure and methods for their preparation are well known in the art and are described for example in U.S. Patent Nos. 2,933,480, 3,093,621, 3,211,709, 3,646,168, 3,790,519, 3,884,993, 3,894,999, 4,059,654, 4,166,055 and 4,584,334.

Copolymers of polyolefins are also useful including copolymers of ethylene and alpha olefins like propylene and 4-methylpentene-1. Copolymers of ethylene and C₃-C₁₀ monoolefins and non-conjugated dienes, herein referred to as EPDM copolymers, are also suitable. Examples of suitable C₃-C₁₀ monoolefins for EPDM copolymers include propylene, 1-butene, 2-butene, 1-pentene, 2-pentene, 1-hexene, 2-hexene and 3-hexene. Suitable dienes include 1,4-hexadiene and monocylic and polycyclic dienes. Mole ratios of ethylene to other C₃-C₁₀ monoolefin monomers can range from 95:5 to 5:95 with diene units being present in the amount of from 0.1 to 10 mol%. EPDM copolymers can be functionalized with an acyl group or electrophilic group for grafting onto the polyphenylene ether as disclosed in U.S. Patent No. 5,258,455.

The substrate may include various additives incorporated in the resin. Such additives include, for example, fillers, reinforcing agents, heat stabilizers, antioxidants, plasticizers, antistatic agents, mold releasing agents, additional resins, blowing agents, such additional additives being readily determined by those of skill in the art without undue experimentation. Examples of fillers or reinforcing agents include glass fibers, asbestos, carbon fibers, silica, talc, and calcium carbonate. Examples of heat stabilizers include triphenyl phosphite, tris-(2,6-dimethylphenyl)phosphite, tris-(mixed mono-and di-nonylphenyl)phosphite, and dimethylbenene phosphonate and trimethyl phosphate. Examples of antioxidants include octadecyl-3-(3,5-di-tert-butyl-4-hydroxyphenyl)propionate, and pentaerythrityl-tetrakis[3-(3,5-di-tert-butyl-4-hydroxyphenyl)propionate]. Examples of plasticizers include dioctyl-4,5-epoxyhexahydrophthalate, tris-(octoxycarbonylethyl)isocyanurate, tristearin, and epoxidized soybean oil. Examples of antistatic agents include glycerol monostearate, sodium stearyl sulfonate, and sodium dodecylbenzenesulfonate. Examples of mold releasing agents include stearyl stearate, beeswax, montan wax, and paraffin wax. Examples of other resins include but are not limited to polypropylene, polystyrene, polymethyl methacrylate, and polyphenylene oxide. Individual, as well as combinations of the foregoing may be used. Such additives may be mixed at a suitable time during the mixing of the components for forming the composition.

The substrate may contain TiO₂. When used, TiO₂ is present in the substrate in an amount greater than 1%, preferably greater than 3% by weight, based on the total weight of the substrate. When used, TiO₂ is present in the substrate in an amount less than 12%, preferably less than 10% by weight of the total layer on average. In one embodiment when the substrate is used in the form of a film, the substrate has a thickness greater than 12.7 µm (0.5 mil) and less than 1.78 mm (70 mils). In another embodiment, it is greater than 50.8 µm (2 mils) and less than 1.27 mm (50 mils). In a third embodiment, it is about greater than 1.27 µm (5 mils) and less than 762 µm (30 mils) on average.

Processing. The compositions used to manufacture each layer (or the substrate) may be formed by techniques known in the art, for example melt blending the ingredients in powder or granular form, extruding the blend and comminuting into pellets or other suitable shapes; or dry mixing the ingredients, followed by mixing in the melted state in an extruder.

The method of processing the compositions into films can be carried out by conventional film extrusion techniques, for example, by melting the different materials of the different layers in separate extruders and conveying those materials to a die where these different materials are combined into a film with a layered structure. Also included are blow molding and injection molding of the various layers.

In one embodiment of the invention in forming the multi-layer article having a weatherable surface, the upper layer and the intermediate layer are coextruded as a composite film. The substrate layer, e.g., polycarbonate, is injected onto the intermediate layer side during a subsequent molding operation. The resulting multi-layer article comprises a substrate (PC), an intermediate film and a top layer. Any ink or decorative layer can be printed on the surface of the outer layer.

The weatherable compositions are suitable for a wide variety of uses, for example in automotive applications such as body panels, cladding, and mirror housings; in recreational vehicles including such as golf carts, boats, and jet skies; and in applications for building and construction, including, for example, outdoor signs, ornaments, and exterior siding for buildings. The final articles can be formed by compression molding, multi-layer blow molding, coextrusion of sheet or film, injection over molding, insertion blow molding and other methods.

Articles comprising the multi-layer composition of the invention, i.e., having a cycloaliphatic polyester in the upper layer, are characterized as having surface gloss measured at an angle of 60 degrees of more than about 60%, a change in gloss of less than about 20% after 3000 hours of weathering according to the ISO4892-2A protocol, and a change in color of less than about 3 after 3000 hours of weathering according to the ISO4892-2A protocol. In another embodiment, the gloss is greater than about 80%, the change in gloss is less than about 10%, and the change in color is less than about 1.5.

The disclosure is further illustrated by the following non-limiting examples.

EXAMPLES. The compositions of the present invention provide an enhanced combination of weatherability and heat aging properties.

In embodiments where PCCD is employed in the upper layer and the intermediate layer, the articles exhibit exceptionally improved properties with respect to yellowing or discoloration and gloss. Articles comprising the PCCD composition accordingly have a change color (expressed in dE) of less than about 3, preferably less than about 2, and most preferably less than about 1.5 after 3000 hours of weathering according to the ISO4892-2A protocol. The compositions furthermore have a gloss (measured at an angle of 60 degrees) of more than about 60%, preferably more than about 70%, and more preferably more than about 80% and a change in gloss of less than about 20%, preferably less than about 15%, and more preferably less than about 10% after 3000 hours of weathering according to the ISO4892 protocol.

In another embodiment where PCCD is employed in the upper layer and the intermediate layer, articles comprising the composition have a change in color (expressed in dE) of less than about 2, preferably less than about 1.5, and most preferably less than about 1 after heat aging at 80°C for three months. The compositions display a gloss (measured at an angle of 60 degrees) of more than about 75%. In another embodiment, of more than about 80%, and a third embodiment of more than about 85%. In one embodiment, with a change in gloss of less than about 15%. Another embodiment of less than about 10%, in yet another embodiment, of less than about 5% after heat aging at 80°C for three months.

In Examples 1-9, multi-layer compositions were back molded using a polycarbonate substrate layer as set forth in Table 1. The top two layers are co-extruded. Example 1 represents a non-limiting embodiment of an article comprising PCCD in the layers, and is compared to other multi-layer substrates (Examples 2-9), some of which are previously disclosed or known in the art. Samples 8 and 9 are commercially available. Comparative examples 2-9 are submitted for purposes of evaluation only.

Sample compositions referring to PCCD indicate 100% PCCD, while samples referring to PCCD/PC indicate a material having a ratio of 70 weight% PCCD and 30 weight% polycarbonate (hereinafter PC). Where indicated, "UV1" indicates that the layer has 0.15 weight% CYASORB UV-5411 (available from Cytec, West Paterson, New Jersey U.S.A.), whereas "UV2" indicates that the layer has 0.50 weight% Tinuvin 1577 and 0.50 weight % Tinuvin 622 in accordance with that disclosed herein.

**Table 1**

| No. | Upper Layer | | Intermediate Layer | | Substrate | |
|---|---|---|---|---|---|---|
| | Composition | Thickness, mils | Composition | Thickness, mils | Composition | Thickness, mils |
| 1 | PCCD/UV2 | 10 | PCCD/TiO² | 10 | PC/TiO² | 10 |
| 2 | PCCD/UV1 | 10 | PCCD/TiO² | 10 | PC/TiO² | 10 |
| 3 | PCCD/UV2 | 10 | PCCD-PC/TiO² | 10 | PC/TiO² | 10 |
| 4 | PCCD-PC/UV1 | 10 | PCCD-PC/TiO² | 10 | PC/TiO² | 10 |
| 5 | PCCD-PC/UV2 | 10 | PCCD-PC/TiO² | 10 | PC/TiO² | 10 |
| 6 | PCCD/UV2 | 10 | None | - | PC/TiO² | 20 |
| 7 | PCCD-PC/UV2 | 10 | None | - | PC/TiO² | 20 |
| 8 | SOLLX¹ | 10 | None | - | PC/TiO² | 20 |
| 9 | KORAD² | 10 | None | - | PC/TiO² | 20 |

| | | | | | | |
|---|---|---|---|---|---|---|
| ¹ Sollx is a polyester-polycarbonate film material available from General Electric Company of Pittsfield, MA, USA ² An acrylic film available under the trade name KORAD from Polymer Extruded Products, Inc., Newark, New Jersey U.S.A. | | | | | | |

Evaluation of the above samples is presented in Table 2 below. Weathering was evaluated using ISO4892-2. Heat aging was evaluated by placing the sample in an air circulation oven at 80°C for three months. These tests were then followed by evaluation of gloss, gloss retention (dGloss) and color measurements. Gloss values were measured using ASTM D523 at a measurement angle of 60 degrees. The color test measures color of the weathered sample using a Cielab System, expressed in L, a and b values. The color change dE is calculated from the L, a and b values measured before and after the weathering test.

**Table 2**

| No. | Gloss 60 | Color | | | Weathering | | | | Heat aging, 3 mos. @80°C | | |
|---|---|---|---|---|---|---|---|---|---|---|---|
| | | L | a | B | Hours | dE | Gloss | d Gloss | dE | Gloss | d Gloss |
| 1 | 90 | 95.8 | -0.6 | 3.7 | 500 | 0.5 | 88 | -2 | 0.6 | 93 | 3 |
| | | | | | 2000 | 0.5 | 91 | 1 | | | |
| | | | | | 3000 | 1.1 | 84 | -6 | | | |
| 2 | 90 | 95.3 | -0.5 | 3.9 | 500 | 1.0 | 88 | -2 | 0.9 | 91 | 2 |
| | | | | | 2000 | 4.4 | 53 | -37 | | | |
| | | | | | 3000 | 5.2 | 15 | -75 | | | |
| 3 | 93 | 97.4 | -0.5 | 2.6 | 500 | 0.5 | 92 | -1 | 0.3 | 97 | 4 |
| | | | | | 2000 | 2.7 | 60 | -33 | | | |
| | | | | | 3000 | 2.6 | 32 | -60 | | | |
| 4 | 94 | 97.3 | -0.5 | 2.7 | 500 | 3.1 | 93 | -1 | 1.0 | 96 | 2 |
| | | | | | 2000 | 8.8 | 31 | -62 | | | |
| | | | | | 3000 | 10 | 4 | -90 | | | |
| 5 | 93 | 97.3 | -0.5 | 2.7 | 500 | 0.7 | 89 | -4 | 0.3 | 91 | -1 |
| | | | | | 2000 | 2.7 | 25 | -68 | | | |
| | | | | | 3000 | 3.3 | 5 | -88 | | | |
| 6 | 101 | 97.0 | -0.7 | 3.1 | 500 | 0.9 | 97 | -4 | 0.7 | 97 | -4 |
| | | | | | 2000 | 1.2 | 40 | -61 | | | |
| | | | | | 3000 | 1.2 | 33 | -68 | | | |
| 7 | 95 | 96.9 | -1.0 | 3.5 | 500 | 0.9 | 90 | -4 | 1.2 | 90 | -4 |
| | | | | | 2000 | 3.5 | 83 | -12 | | | |
| | | | | | 3000 | 5.0 | 68 | -27 | | | |
| 8 | 104 | 95.9 | -0.8 | 5.4 | 500 | 10 | 102 | -1 | 1.0 | 95 | -8 |
| | | | | | 2000 | 12 | 105 | 1 | | | |
| | | | | | 3000 | 13 | 109 | 6 | | | |
| 9 | 87 | 96.9 | -1.0 | 3.5 | 500 | 0.6 | 88 | 1 | 1.4 | 70 | -17 |
| | | | | | 2000 | 0.7 | 76 | -11 | | | |
| | | | | | 3000 | 0.9 | 50 | -37 | | | |

Example 1 clearly demonstrates the benefits of a multi-layer composition comprising PCCD the layers. Under the test conditions, Example 1 demonstrates an increased level of weatherability and heat aging than would be expected by one of ordinary skill in the art in view of the comparative examples. Specifically, UV2 package protects better against color shift than UV1, (compare e.g. sample 2 with samples 1,3 and 6, and compare sample 4 with samples 5 and 7.) The presence of polycarbonate in the upper layer also leads to a larger color shift (compare sample 2 with samples 4, and compare samples 1 and 3 with samples 5, and 7).

The composition of the intermediate layer between the upper layer and the base substrate layer also affects color shift and gloss retention, wherein PCCD alone demonstrates an unexpected improvement compared to PCCD/PC and PC alone (compare samples 1 with samples 3, 5, 6 and 7). This is true even though gloss retention of the top layer is thought to be related to erosion phenomena at the exposed surface, which phenomena would not be expected to be affected by the composition of the intermediate layer.

As shown in Table 2, although PCCD has a glass transition temperature (Tg) of about 60°C, unexpectedly the heat aging characteristics at 80°C of Example 1 are superior to the Example employing SOLLX, which has a T_{g} of about 145°C, as well as Example employing an upper layer of acrylic. As demonstrated in the examples, the compositions provide for weatherable finishes, and in particular outer finishes that provide protection to an underlying surface or base substrate. Such compositions aid in maintaining gloss and shine, and furthermore do not appreciably yellow during use.

In examples 10-14, which are comparative multi-layer compositions were back molded using a polycarbonate substrate layer as set forth in Table 1.

In Examples 10-14, a multi-layered article having an upper layer employing aliphatic polyamide is compared with articles comprising other materials in the prior art for the upper layer. In all examples, the intermediate layer is a film comprising Xenoy, a PC / PBT blend from General Electric Company. The materials are co-extruded to produce film samples of 762 µm (30 mil) thick, with the upper layer of about 254 µm (10 mil) thick.

Evaluation of the samples is presented in Table 3 below. A crock mar resistance test was performed in accordance with Chrysler laboratory procedure LP-463PB-54-01. Crocking resistance is used herein to mean the ability to clean laminate surfaces with a mild abrasive without removing the surface gloss / pigmentation. In the chemical resistance test, the samples were left standing in gasoline for 1/2 hr, then removed and observed for changes in visual appearance. The surface roughness was measured by way of stylus profilometry (2 separate runs), employing 400 µm (micron) stylus, 400 g load, stylus moves at 0.1 mm/sec, over 30 mm.

**Table 3**

| Sample | Top Layer | Chemical Resistance Test | Crock-Mar Test | Stylus Scratch Test¹ | Stylus Scratch Test |
|---|---|---|---|---|---|
| No. | Composition | Effect | % Gloss Retention | Scratch Depth (microns) | Scratch Depth (microns) |
| 10 | Polyamide¹ | none | 47 | 18 | 9.0 |
| 11 | Korad⁵ | none | 21 | 30 | 13.6 |
| 12 | Clear Coat³ | none | - | 8 | 8.7 |
| 13 | PCCD² | Surface dulls | 8 | 35 | 20 |
| 14 | PC³ | cracks | 42 | 18 | 12.3 |

| | | | | | |
|---|---|---|---|---|---|
| ¹ Trogamid - transparent polyamide from Degussa AG. ² Eastman PCCD product having a designation number of X2873 ³ Lexan PC105 from General Electric Company of Pittsfield, MA. ⁴ Clear Coat - acrylic urethane clear coat from PPG of Pittsburg, PA. ⁵ Korad - acrylic film from Polymer Extruder Products. | | | | | |

As shown above, the polyamide top layer in Example 10 provides for a multi-layered article having improved chemical protection and scratch resistance over the base substrate layer (i.e., polycarbonate (PC), polyester (PCCD), and Korad alone.

While the invention has been described with reference to an exemplary embodiment, it will be understood by those skilled in the art that various changes may be made and equivalents may be substituted for elements thereof without departing from the scope of the invention.

For the sake of good order, various aspects of the invention are set out in the following clauses:
1. A multi-layer composition, comprising
   a) an upper layer comprising as the only polymer a cycloaliphatic polyester resin and an additive composition comprising a hindered amine light stabilizer and a hydroxyphenyl-triazine or -pyrimidine UV absorber;
   b) an intermediate layer comprising as the only polymer a cycloaliphatic polyester resin;
   c) a polymeric substrate;
   wherein said intermediate layer is disposed between and in intimate contact with said upper layer and said substrate.
2. The multi-layer composition of clause 1, characterized by a peel strength adhesion between the upper layer and the intermediate layer of at least about 268 kg/m (5 pounds per inch) as measured by a 180 degree peel test.
3. The multi-layer composition of clause 1, wherein the intermediate layer further comprises an additive composition comprising at least one of TiO₂, dyes, pigments, special effects additives, or a mixture thereof.
4. The multi-layer composition of clause 1, wherein said hindered amine light stabilizer comprises a substituted piperidine moiety or an oligomer substituted piperidine moiety.
5. The multi-layer composition of clause 4, wherein said hindered amine light stabilizer is selected from one of:
   a) a 4-piperidinol derivative having the general formula 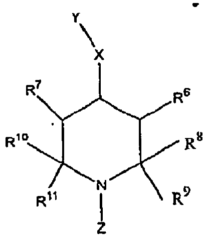 wherein X is oxygen; Y is hydrogen, hydroxyalkyl, aminoalkyl, or alkyl substituted by both hydroxyl and amino groups, where the alkyl has up to about 20 carbon atoms on average; R⁶ and R⁷ are each independently selected from the group consisting of hydrogen, an alkyl group, an alkenyl group, or an arylalkyl group; R⁸, R⁹, R¹⁰, and R¹¹ are each independently selected from the group consisting of an alkyl group having 1 to about 6 carbon atoms, phenyl, an arylalkyl group, an aromatic heterocyclic group having 5 or 6 carbon atoms, and containing an oxygen, sulphur or nitrogen atom, or R⁸, R⁹, R¹⁰, and R¹¹ respectively, together or with the carbon atom to which they are attached are a C₅ to C₁₂ cycloalkyl group; Z is an oxy radical, an alkyl group, an alkenyl group, an alkoxyalkyl group, an arylalkyl group that is unsubstituted or which has one or more substituents in its aryl moiety; and R¹³ is hydrogen, an alkyl group, an ester, a carbonyl, an acyl group, an aliphatic acyl group, or a group represented by the formula -COOR¹⁵, or - OOCR¹⁵, wherein R¹⁵ is an alkyl group, a benzyl group, a phenyl group;
   b) a hindered amine light stabilizer of the formula: 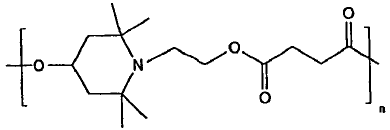 wherein n is on average greater than 9, and less than 12
   c) a hindered amine light stabilizer of the formula: 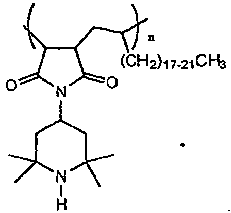 wherein n is on average greater than 4, and less than 7;
   d) a hindered amine light stabilizer of the formula: 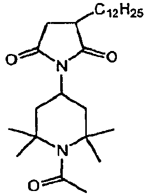
   e) or a hindered amine light stabilizer of the formula: 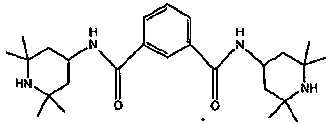
   f) or a mixture comprising at least one of the foregoing hindered amine light stabilizers.
6. The composition of clause 1, wherein said hindered amine light stabilizer is present in an amount greater than 0.1% by weight, and less than 10% by weight of the total weight of said upper layer.
7. The composition of clause 1, wherein said hydroxyphenyl-triazine or-pyrimidine UV absorber contains a 2,4,6-trisaryl-1,3,5-triazine moity and a free hydroxyl group, or contains a 2,4,6-trisaryl-1,3-pyrimidine moiety and a free hydroxyl group.
8. The composition of clause 1, wherein said UV absorber is selected from one of:
   a) an UV absorber of the formula: 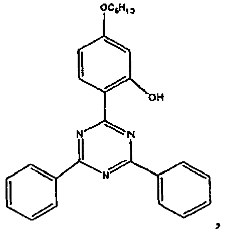 and
   b) an UV absorber of the formula: 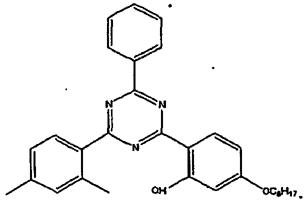
9. The composition of clause 1, wherein said hydroxyphenyl-triazine or-pyrimidine UV absorber is present at a concentration greater than or equal to 0.01% by weight, and less than or equal to 10% by weight of said upper layer.
10. The composition of clause 1, wherein the substrate layer comprises polycarbonate.
11. The composition of clause 1, wherein the substrate is in the form of a film.
12. An article comprising the composition of clause 1.
13. The multi-layer composition of clause 1, wherein said upper layer comprises as the only polymer a cycloaliphatic polyester resin.
14. The multi-layer composition of clause 13, wherein the cycloaliphatic polyester has recurring units of the formula: 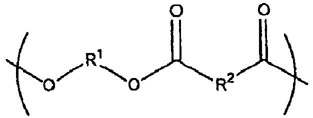 wherein R¹ is an alkyl or cycloaliphatic radical preferably having from 2 to 12 carbon atoms, and R² is an alkyl or a cycloaliphatic radical, provided that at least one of R¹ or R² is a cycloalkyl group.
15. The composition of clause 14, wherein R¹ and R² is each a cyclohexylidene.
16. The composition of clause 13, characterized as having surface gloss measured at an angle of 60 degrees of more than about 60%, a change in gloss of less than about 20% after 3000 hours of weathering according to the ISO4892-2A protocol, and a change in color of less than about 3 after 3000 hours of weathering according to the ISO4892-2A protocol.
17. The multi-layer composition of clause 13, wherein the intermediate layer further comprises an additive composition comprising at least one of TiO₂, dyes, pigments, special effects additives, or a mixture thereof.
18. The multi-layer composition of clause 13, wherein said hindered amine light stabilizer comprises a substituted piperidine moiety or an oligomer substituted piperidine moiety.
19. The multi-layer composition of clause 13, wherein said hindered amine light stabilizer is selected from one of:
   a) a 4-piperidinol derivative having the general formula 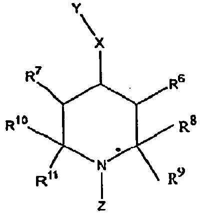 wherein X is oxygen; Y is hydrogen, hydroxyalkyl, aminoalkyl, or alkyl substituted by both hydroxyl and amino groups, where the alkyl has up to about 20 carbon atoms on average; R⁶ and R⁷ are each independently selected from the group consisting of hydrogen, an alkyl group, an alkenyl group, or an arylalkyl group; R⁸, R⁹, R¹⁰, and R¹¹ are each independently selected from the group consisting of an alkyl group having 1 to 6 carbon atoms, phenyl, an arylalkyl group, an aromatic heterocyclic group having 5 or 6 carbon atoms, and containing an oxygen, sulphur or nitrogen atom, or R⁸, R⁹, R¹⁰, and R¹¹ respectively, together or with the carbon atom to which they are attached are a C₅ to C₁₂ cycloalkyl group; Z is an oxy radical, an alkyl group, an alkenyl group, an alkoxyalkyl group, an arylalkyl group that is unsubstituted or which has one or more substituents in its aryl moiety; and R¹³ is hydrogen, an alkyl group, an ester, a carbonyl, an acyl group, an aliphatic acyl group, or a group represented by the formula -COOR¹⁵, or - OOCR¹⁵, wherein R¹⁵ is an alkyl group, a benzyl group, a phenyl group;
   b) a hindered amine light stabilizer of the formula: 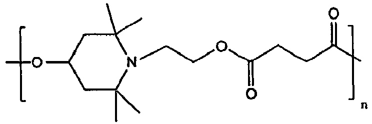 wherein n is on average greater than 9, and less than 12
   c) a hindered amine light stabilizer of the formula: 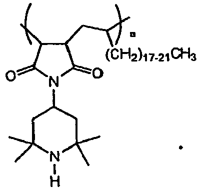 wherein n is on average greater than 4, and less than 7;
   d) a hindered amine light stabilizer of the formula: 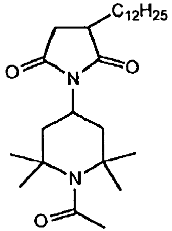
   e) or a hindered amine light stabilizer of the formula: 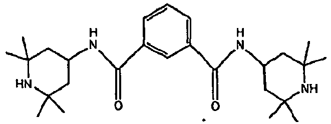
   f) or a mixture comprising at least one of the foregoing hindered amine light stabilizers.
20. The composition of clause 19, wherein said hindered amine light stabilizer is present in an amount greater than 0.1% by weight, and less than 10% by weight of the total weight of said upper layer.
21. The composition of clause 13, wherein said hydroxyphenyl-triazine or-pyrimidine UV absorber contains a 2,4,6-trisaryl-1,3,5-triazine moity and a free hydroxyl group, or contains a 2,4,6-trisaryl-1,3-pyrimidine moiety and a free hydroxyl group.
22. The composition of clause 13, wherein said UV absorber is selected from one of:
   a) an UV absorber of the formula: 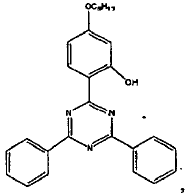 and
   b) an UV absorber of the formula: 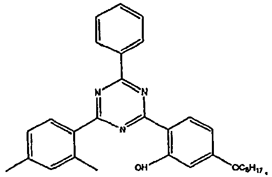
23. The composition of clause 13, wherein said hydroxyphenyl-triazine or - pyrimidine UV absorber is present at a concentration greater than or equal to 0.01% by weight, and less than or equal to 10% by weight of said upper layer.
24. The composition of clause 13, wherein the substrate layer comprises polycarbonate.
25. The composition of clause 13, wherein the substrate is in the form of a film.
26. An article comprising the composition of clause 13.
27. The multi-layer composition of clause 13, wherein said upper layer comprises as the only polymer the cycloaliphatic polyester resin and a hindered amine light stabilizer of the formula: 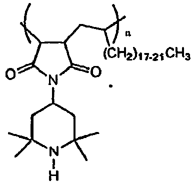 wherein n is on average greater than 4, and less than 7;
   said intermediate layer comprises as the only polymer a cycloaliphatic polyester resin, and
   wherein a peel strength adhesion between the upper layer and the intermediate layer is at least about 268 kg/m (5 pounds per inch) as measured by a 180 degree peel test.

## Claims

1. A multi-layer composition, comprising
a) an upper layer comprising as the only polymer a cycloaliphatic polyester resin and an additive composition comprising a hindered amine light stabilizer and a hydroxyphenyl-triazine or -pyrimidine UV absorber;
b) an intermediate layer comprising as the only polymer a cycloaliphatic polyester resin; and
c) a polymeric substrate;
wherein said intermediate layer is disposed between and in intimate contact with said upper layer and said substrate.

2. The multi-layer composition of claim 1, wherein the intermediate layer further comprises an additive composition comprising at least one of TiO₂, dyes, pigments, special effects additives, or a mixture thereof.

3. The multi-layer composition of claim 1, wherein said hindered amine light stabilizer comprises a substituted piperidine moiety or an oligomer substituted piperidine moiety.

4. The multi-layer composition of claim 3, wherein said hindered amine light stabilizer is selected from one of:
a) a 4-piperidinol derivative having the general formula 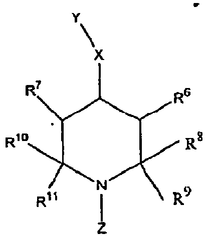 wherein X is oxygen; Y is hydrogen, hydroxyalkyl, aminoalkyl, or alkyl substituted by both hydroxyl and amino groups, where the alkyl has up to about 20 carbon atoms on average; R⁶ and R⁷ are each independently selected from the group consisting of hydrogen, an alkyl group, an alkenyl group, or an arylalkyl group; R⁸, R⁹, R¹⁰, and R¹¹ are each independently selected from the group consisting of an alkyl group having 1 to 6 carbon atoms, phenyl, an arylalkyl group, an aromatic heterocyclic group having 5 or 6 carbon atoms, and containing an oxygen, sulphur or nitrogen atom, or R⁸, R⁹, R¹⁰, and R¹¹ respectively, together or with the carbon atom to which they are attached are a C₅ to C₁₂ cycloalkyl group; Z is an oxy radical, an alkyl group, an alkenyl group, an alkoxyalkyl group, an arylalkyl group that is unsubstituted or which has one or more substituents in its aryl moiety; and R¹³ is hydrogen, an alkyl group, an ester, a carbonyl, an acyl group, an aliphatic acyl group, or a group represented by the formula -COOR¹⁵, or -OOCR¹⁵, wherein R¹⁵ is an alkyl group, a benzyl group, a phenyl group;
b) a hindered amine light stabilizer of the formula: 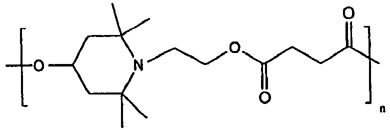 wherein n is on average greater than 9, and less than 12
c) a hindered amine light stabilizer of the formula: 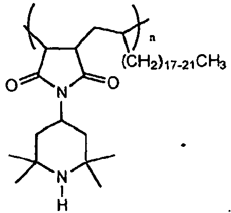 wherein n is on average greater than 4, and less than 7;
d) a hindered amine light stabilizer of the formula: 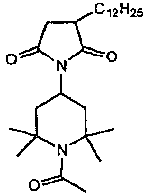
e) or a hindered amine light stabilizer of the formula: 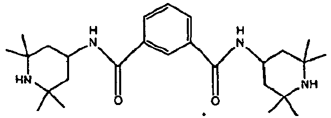
f) or a mixture comprising at least one of the foregoing hindered amine light stabilizers.

5. The composition of claim 1, wherein said hindered amine light stabilizer is present in an amount greater than 0.1% by weight, and less than 10% by weight of the total weight of said upper layer.

6. The composition of claim 1, wherein said hydroxyphenyl-triazine or - pyrimidine UV absorber contains a 2,4,6-trisaryl-1,3,5-triazine moiety and a free hydroxyl group, or contains a 2,4,6-trisaryl-1,3-pyrimidine moiety and a free hydroxyl group.

7. The composition of claim 1, wherein said UV absorber is selected from one of:
a) an UV absorber of the formula: 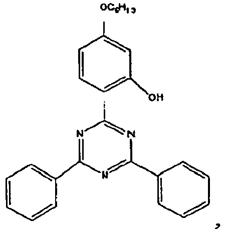 and
b) an UV absorber of the formula:

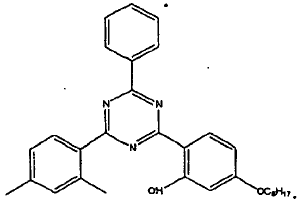

8. The composition of claim 1, wherein said hydroxyphenyl-triazine or - pyrimidine UV absorber is present at a concentration greater than or equal to 0.01% by weight, and less than or equal to 10% by weight of said upper layer.

9. The composition of claim 1, wherein the substrate layer comprises polycarbonate.

10. The composition of any preceding claim, wherein the substrate is in the form of a film.

## Patentansprüche

1. Mehrschichtige Zusammensetzung, umfassend
a) eine obere Schicht, umfassend als einziges Polymer ein cycloaliphatisches Polyesterharz sowie eine Additivzusammensetzung, umfassend einen (sterisch) gehinderten Amin-Lichtstabilisator und einen Hydroxyphenyltriazin- oder -pyrimidin-UV-Absorber;
b) eine dazwischenliegende Schicht, umfassend als einziges Polymer ein cycloaliphatisches Polyesterharz; und
c) ein polymeres Substrat,
wobei die dazwischenliegende Schicht zwischen und in engem Kontakt mit der oberen Schicht und dem Substrat angeordnet ist.

2. Mehrschichtige Zusammensetzung nach Anspruch 1, wobei die dazwischenliegende Schicht ferner eine Additivzusammensetzung umfasst, die wenigstens eines von TiO₂, Farbstoffen, Pigmenten, Additiven für Spezialeffekte oder ein Gemisch hiervon umfasst.

3. Mehrschichtige Zusammensetzung nach Anspruch 1, wobei der gehinderte Amin-Lichtstabilisator einen substituierten
Piperidinteil oder einen Oligomer-substituierten
Piperidinteil umfasst.

4. Mehrschichtige Zusammensetzung nach Anspruch 3, wobei der gehinderte Amin-Lichtstabilisator ausgewählt ist aus einem von:
a) einem 4-Piperidinolderivat mit der allgemeinen Formel 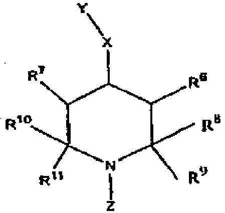 wobei X Sauerstoff ist, Y Wasserstoff ist, Hydroxyalkyl, Aminoalkyl oder Alkyl substituiert sowohl durch Hydroxyl- als auch Aminogruppen, wobei das Alkyl bis zu etwa 20 Kohlenstoffatome im Durchschnitt hat; R⁶ und R⁷ jeweils unabhängig ausgewählt sind aus der Gruppe bestehend aus Wasserstoff, einer Alkylgruppe, einer Alkenylgruppe oder einer Arylalkylgruppe; wobei R⁸, R⁹, R¹⁰ und R¹¹ jeweils unabhängig ausgewählt sind aus der Gruppe bestehend aus einer Alkylgruppe mit 1 bis 6 Kohlenstoffatomen, Phenyl, einer Arylalkylgruppe, einer aromatischen heterocyclischen Gruppe mit 5 oder 6 Kohlenstoffatomen und ein Sauerstoff-, Schwefel- oder Stickstoffatom enthalten, oder R⁸, R⁹, R¹⁰ und R¹¹ jeweils zusammen oder mit dem Kohlenstoffatom, an das sie angehängt sind, eine C₅ bis C₁₂ Cycloalkylgruppe sind; Z ein Oxyradikal, eine Alkylgruppe, eine Alkylengruppe, eine
Alkoxyalkylgruppe, eine Arylalkylgruppe ist, die unsubstituiert ist oder die einen oder mehrere Substituenten in ihrem Arylteil hat; und R¹³ Wasserstoff, eine Alkylgruppe, ein Ester, ein Carbonyl, eine Acylgruppe, eine aliphatische Acylgruppe oder eine Gruppe dargestellt durch die Formel
-COOR¹⁵ oder -OOCR¹⁵ ist, wobei R¹⁵ eine Alkylgruppe, eine Benzylgruppe, eine Phenylgruppe ist;
b) einem gehinderten Amin-Lichtstabilisator mit der Formel: 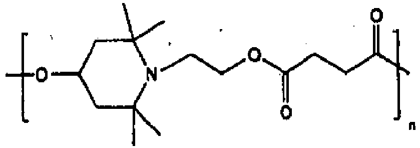 wobei n im Durchschnitt größer als 9 und kleiner als 12 ist;
c) einem gehinderten Amin-Lichtstabilisator mit der Formel: 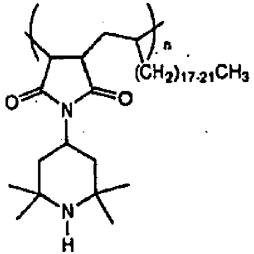 wobei n im Durchschnitt größer als 4 und kleiner als 7 ist;
d) einem gehinderten Amin-Lichtstabilisator mit der Formel: 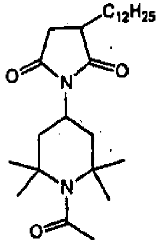
e) oder einem gehinderten Amin-Lichtstabilisator mit der Formel: 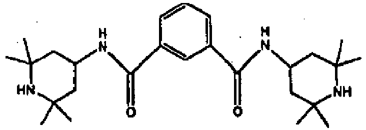
f) oder einer Mischung, umfassend wenigstens einen der vorhergehenden gehinderten Amin-Lichtstabilisatoren.

5. Zusammensetzung nach Anspruch 1, wobei der gehinderte Amin-Lichtstabilisator in einer Menge größer als 0,1
Gew.-% und weniger als 10 Gew.-% des Gesamtgewichts der oberen Schicht vorliegt.

6. Zusammensetzung nach Anspruch 1, wobei der Hydroxyphenyltriazin- oder-pyrimidin-UV-Absorber einen 2,4,6-Trisaryl-1,3,5-triazinteil und eine freie Hydroxylgruppe enthält, oder einen 2,4,6-Trisaryl-1,3,5-pyrimidinteil und eine freie Hydroxylgruppe enthält.

7. Zusammensetzung nach Anspruch 1, wobei der UV-Absorber ausgewählt ist aus einem von:
a) einem UV-Absorber mit der Formel: 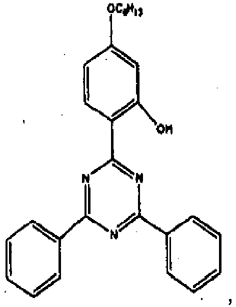 und
b) einem UV-Absorber mit der Formel:

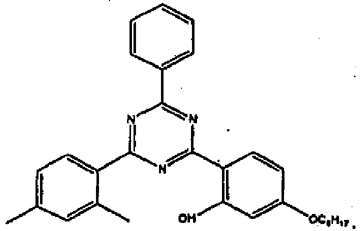

8. Zusammensetzung nach Anspruch 1, wobei der Hydroxyphenyltriazin- oder -pyrimidin-UV-Absorber in einer Konzentration größer oder gleich 0,01 Gew.-% und weniger oder gleich 10 Gew.-% der oberen Schicht vorliegt.

9. Zusammensetzung nach Anspruch 1, wobei die Substratschicht Polycarbonat umfasst.

10. Zusammensetzung nach einem vorhergehenden Anspruch, wobei das Substrat in Form eines Films bzw. einer Folie vorliegt.

## Revendications

1. Composition multi-couches comprenant :
a) une couche supérieure comportant comme seul polymère une résine polyester cycloaliphatique, et une composition d'adjuvants comprenant un photostabilisant à amines encombrées et un agent d'absorption d'ultraviolets à base d'hydroxyphényl-triazine ou pyrimidine ;
b) une couche intermédiaire comportant comme seul polymère une résine polyester cycloaliphatique,; et
c) un substrat polymère ;
ladite couche intermédiaire étant disposée entre ladite couche supérieure et ledit substrat, et avec lesquels elle est en contact étroit.

2. Composition multi-couches selon la revendication 1, la couche intermédiaire comprenant en outre une composition d'adjuvants comportant l'une au moins des substances suivantes : TiO₂, teintures, pigments, adjuvants à effets spéciaux, ou bien un mélange de ceux-ci.

3. Composition multi-couches selon la revendication 1, ledit photostabilisant à amines encombrées comportant une fraction piperidine substituée ou une fraction piperidine oligomère substituée.

4. Composition multi-couches selon la revendication 3, ledit photostabilisant à amines encombrées étant sélectionné à partir de l'une des substances suivantes :
a) un dérivé du 4-piperidinol ayant la formule générale : 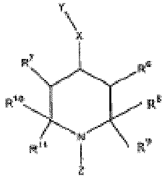 où X est l'oxygène ; Y est l'hydrogène, l'hydroxyalkyle, l'aminoalkyle ou l'alkyle ayant été substitué tant par des groupes hydroxyl que par des groupes amino, cas dans lequel l'alkyle a jusqu'à 20 atomes de carbone environ en moyenne ; R⁶ et R⁷ ont chacun été sélectionnés indépendamment à partir du groupe composé d'hydrogène, d'un groupe alkyle, d'un groupe alkényle ou d'un groupe arylalkyle ; R⁸, R⁹, R¹⁰ et R¹¹ ont chacun été sélectionnés indépendamment à partir du groupe composé d'un groupe alkyle avec 1 à 6 atomes de carbone, un phényle, un groupe arylalkyle, un groupe hétérocyclique aromatique avec 5 ou 6 atomes de carbone et contenant un atome d'oxygène, de soufre et d'azote, ou R⁸, R⁹, R¹⁰ et R¹¹ respectivement, conjointement ou avec l'atome de carbone auquel ils sont fixés constituent un groupe cycloalkyle C₅ à C₁₂ ; Z est un radical oxy, un groupe alkyle, un groupe alkényle, un groupe alkoxyalkyle, un groupe arylalkyle qui est non substitué ou dont la fraction aryle contient un ou plusieurs substituants ; et R¹³ est un hydrogène, un groupe alkyle, un ester, un carbonyle, un groupe acyle, un groupe acyle aliphatique ou un groupe représenté par la formule, à savoir : -COOR¹⁵, ou-OOCR¹⁵, cas dans lequel R¹⁵ est un groupe alkyle, un groupe benzyle, un groupe phényle ;
b) un photostabilisant à amines encombrées ayant pour formule : 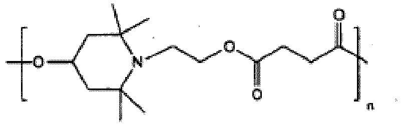 cas dans lequel n est en moyenne supérieur à 9 et inférieur à 12 ;
c) un photostabilisant à amines encombrées ayant pour formule : 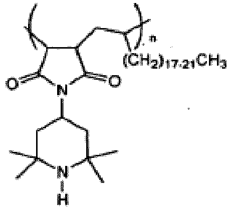 cas dans lequel n est en moyenne supérieur à 4 et inférieur à 7 ;
d) un photostabilisant à amines encombrées ayant pour formule : 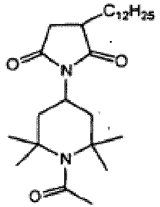
e) ou un photostabilisant à amines encombrées ayant pour formule : 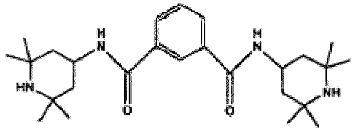
f) ou un mélange contenant au moins l'un des photostabilisants à amines encombrées précités.

5. Composition selon la revendication 1, ledit photostabilisant à amines encombrées étant présent suivant une quantité qui est supérieure à 0,1% en poids, et inférieure à 10% en poids par rapport au poids total de ladite couche supérieure.

6. Composition selon la revendication 1, ledit agent d'absorption d'ultraviolets à base d'hydroxyphényl-triazine ou pyrimidine contenant une fraction 2,4,6-trisaryl-1,3,5-triazine et un groupe hydroxyle libre ou contenant une fraction 2,4,6-trisaryl-1,3-pyrimidine et un groupe hydroxyle libre.

7. Composition selon la revendication 1, ledit agent d'absorption d'ultraviolets étant sélectionné à partir de l'un des agents suivants :
a) un agent d'absorption d'ultraviolets ayant pour formule : 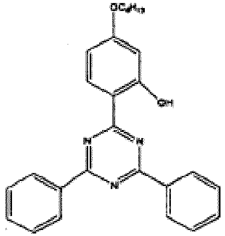 , et
b) un agent d'absorption d'ultraviolets ayant pour formule :

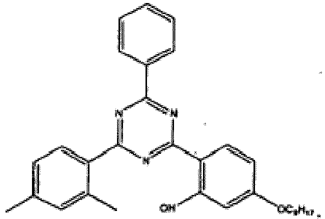

8. Composition selon la revendication 1, ledit agent d'absorption d'ultraviolets à base d'hydroxyphényl-triazine ou pyrimidine étant présent suivant une concentration qui est supérieure ou égale à 0,01% en poids, et inférieure ou égale à 10% en poids par rapport à ladite couche supérieure.

9. Composition selon la revendication 1, ladite couche de substrat comprenant du polycarbonate.

10. Composition selon l'une quelconque des revendications précédentes, le substrat se présentant sous la forme d'une pellicule.
